# EUROPEAN PATENT APPLICATION

(11) **EP 4 752 943 A1**
(43) Date of publication of application: **03.06.2026**
(21) Application number: 25220010.0
(22) Date of filing: 02.12.2025
(51) Int. Cl.: H01M 4/04, H01M 4/36, H01M 4/587, H01M 4/133

(54) **ANODE FOR LITHIUM SECONDARY BATTERY AND LITHIUM SECONDARY BATTERY INCLUDING THE SAME**

(30) Priority: 02.12.2024 KR 20240176840; 01.12.2025 KR 20250186559
(71) Applicant: SK On Co., Ltd., Seoul 03161 (KR)
(72) Inventor: KANG, Byung Chan, 34124 Daejeon (KR); YU, Gyeong Hwa, 34124 Daejeon (KR); YIM, Hyung Joo, 34124 Daejeon (KR); JIN, Bo Gyeong, 34124 Daejeon (KR); HEO, Kyun, 34124 Daejeon (KR)
(74) Representative: Prüfer & Partner mbB Patentanwälte · Rechtsanwälte

(57) **Abstract**

An anode for a lithium secondary battery includes an anode current collector and an anode composite layer disposed on at least one surface of the anode current collector and including a graphite-based anode active material, wherein the anode composite layer includes a first anode composite layer disposed on the anode current collector and a second anode composite layer disposed on the first anode composite layer, the graphite-based anode active material includes artificial graphite and natural graphite, a weight of artificial graphite in the graphite-based anode active material included in the first anode composite layer is greater than a weight of natural graphite, and a weight of natural graphite in the graphite-based anode active material included in the second anode composite layer is greater than a weight of artificial graphite.

## Description

### TECHNICAL FIELD

The disclosure and implementations disclosed in this patent document generally relate to an anode for a lithium secondary battery and a lithium secondary battery including the same.

### BACKGROUND

Recently, research has been actively conducted on electric vehicles (EVs) as a potential replacement for fossil fuel-powered vehicles, a major cause of air pollution. These EVs primarily use lithium secondary batteries having high discharge voltage and output stability as a power source thereof, and here, high-performance lithium secondary batteries are required to improve the performance of EVs.

As demand for high-performance lithium secondary batteries has increased, the need for technologies that may improve the performance of the anodes in lithium secondary batteries, such as the energy density, but is not limited thereto.

### SUMMARY

The present disclosure may be implemented in some embodiments to provide an anode for a lithium secondary battery having high energy density.

The present disclosure may also be implemented in some embodiments to provide an anode for a lithium secondary battery having improved rapid charging performance.

The present disclosure may also be implemented in some embodiments to improve the productivity of anodes for lithium secondary batteries.

In some embodiments of the present disclosure, an anode for a lithium secondary battery includes: an anode current collector; and an anode composite layer disposed on at least one surface of the anode current collector and including a graphite-based anode active material, wherein the anode composite layer includes: a first anode composite layer disposed on the anode current collector; and a second anode composite layer disposed on the first anode composite layer, the graphite-based anode active material includes artificial graphite and natural graphite, a weight of artificial graphite in the graphite-based anode active material included in the first anode composite layer is greater than a weight of natural graphite, and a weight of natural graphite in the graphite-based anode active material included in the second anode composite layer is greater than a weight of artificial graphite.

A content of artificial graphite may be greater than 50 wt% based on a total weight of the graphite-based anode active material included in the first anode composite layer.

The first anode composite layer may not include natural graphite.

The graphite-based anode active material included in the first anode composite layer may be artificial graphite.

A content of natural graphite may be greater than 50 wt% based on a total weight of the graphite-based anode active material included in the second anode composite layer.

The second anode composite layer may not include artificial graphite.

The graphite-based anode active material included in the second anode composite layer may be natural graphite.

A total weight of artificial graphite included in the anode composite layer may be greater than a total weight of natural graphite.

Based on the graphite-based anode active material included in the entire anode composite layer including the first anode composite layer and the second anode composite layer, artificial graphite may be included in an amount of 60 wt% or more and 90 wt% or less.

Based on the graphite-based anode active material included in the entire anode composite layer including the first anode composite layer and the second anode composite layer, natural graphite may be included in an amount of 10 wt% or more and 40 wt% or less.

A loading weight of the first anode composite layer may be greater than a loading weight of the second anode composite layer.

A ratio of the loading weight of the first anode composite layer may be 70 to 95% based on a total loading weight of the first anode composite layer and the second anode composite layer.

A ratio of the loading weight of the second anode composite layer may be 5 to 30% based on the total loading weight of the first anode composite layer and the second anode composite layer.

A thickness of the second anode composite layer may be 10 to 50% of a thickness of the entire anode composite layer.

In some embodiments of the present disclosure, there is provided a lithium secondary battery including the anode for a lithium secondary battery according to one of embodiments described above.

In some embodiments of the present disclosure, a method for manufacturing an anode for a lithium secondary battery includes: applying a first anode composite slurry including a graphite-based anode active material to at least one surface of an anode current collector; applying a second anode composite slurry including a graphite-based anode active material to the applied first anode composite slurry; drying the applied first and second anode composite slurries to form a first anode composite layer and a second anode composite layer; and rolling the first and second anode composite layers, wherein the graphite-based anode active material includes artificial graphite and natural graphite, a weight of artificial graphite in the graphite-based anode active material included in the first anode composite layer is greater than a weight of natural graphite, and a weight of natural graphite in the graphite-based anode active material included in the second anode composite layer is greater than a weight of artificial graphite.

The rolling may be performed at a line pressure of 0.50 to 1.20 Ton/cm.

### BRIEF DESCRIPTION OF DRAWINGS

Certain aspects, features, and advantages of the present disclosure are illustrated by the following detailed description with reference to the accompanying drawings.
FIG. 1 is a conceptual cross-sectional view of an anode (or a negative electrode) for a lithium secondary battery according to a preferred embodiment;

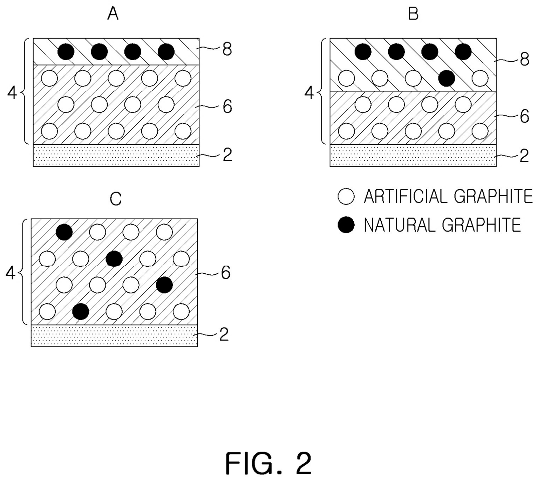

FIG. 2 is a conceptual cross-sectional view of anodes for a lithium secondary battery according to Examples and Comparative Examples, in which A is an anode according to an Example having a dual-layer structure in which a second anode composite layer includes natural graphite, B is an anode according to an Example having a dual-layer structure in which the second anode composite layer includes a mixture of natural graphite and artificial graphite, and C is an anode according to a Comparative Example having a single-layer structure in which the anode composite layer includes a mixture of natural graphite and artificial graphite; and
FIG. 3 is a graph illustrating a change in the blackness-whiteness (or optical density) of a surface of a rolling roll, measured every 50 meters while manufacturing the anodes of Examples 1 and 2 and Comparative Examples 1 to 4 over a length of 500 meters.

### DETAILED DESCRIPTION

As described above, there is a need for the development of technologies capable of improving the performance of anodes for lithium secondary batteries. According to a preferred embodiment, a process of manufacturing an anode for a lithium secondary battery may include a rolling process to increase the energy density of the secondary battery. Specifically, the rolling process may be a process of physically pressing an anode composite layer formed on an anode current collector and including an anode active material using rolling equipment, such as a rolling roll. By performing the rolling process on the anode composite layer using the rolling equipment, the thickness of the anode may be reduced and the amount of active material per unit volume may be increased, thereby increasing the energy density of the secondary battery including the anode.

However, increasing the pressure during the rolling process to increase the energy density of the secondary battery may result in particles constituting the anode composite layer adhering to the surface of the rolling equipment, potentially contaminating the equipment. Also, if the amount of particles adhering to the surface of the rolling equipment increases and forms agglomerates, these agglomerates may act as surface irregularities on the rolling roll, thereby causing surface defects on the anode, such as forming concave marks (or intaglios) on the anode surface.

Also, if the amount of binder included in the anode composite layer is reduced to improve the rapid charging performance of lithium secondary batteries, the binding strength of the anode active material within the anode composite layer may be reduced. In this case, anode active material particles may detach from the anode and adhere to the surface of the rolling equipment, thereby further intensifying the previously described defects in the surface quality of the anode.

To address the defects in the quality of the electrode caused by contamination on the surface of the rolling equipment, a cleaning unit may be installed on the surface of the rolling equipment to remove contaminants adhering to the rolling equipment during operation. However, the operation of the contamination removal device may make it difficult to completely remove particles adhering to the surface of the rolling equipment.

The cleaning unit may include equipment, such as a scraper, non-woven fabric, or a cleaning solution sprayer. To enhance the cleaning effect of the surface of the rolling equipment, the equipment of the cleaning unit may be improved or operating conditions of the cleaning unit may be strengthened. However, this may require periodic shutdown of the electrode production equipment to clean the rolling equipment. In this case, the interruption of electrode production equipment may reduce electrode productivity.

Meanwhile, if the contamination level on the surface of the rolling equipment is so severe that electrode production is impossible, the contamination level on the surface of the rolling equipment may be mitigated by performing the rolling process in a manner that decreases the electrode composite density. In this case, however, it may be difficult to achieve high-energy-density electrodes and secondary batteries.

Therefore, the present disclosure provides, as a preferred embodiment, an anode for a lithium secondary battery that may mitigate the aforementioned problems and a lithium secondary battery including the same. Hereinafter, embodiments of the present disclosure will be described in more detail with reference to the accompanying drawings. However, this is merely an example and the present disclosure is not limited to the specific embodiments described as examples.

According to a preferred embodiment of the present disclosure, an anode for a lithium secondary battery includes: an anode current collector; and an anode composite layer disposed on at least one surface of the anode current collector and including a graphite-based anode active material. The anode composite layer includes: a first anode composite layer disposed on the anode current collector; and a second anode composite layer disposed on the first anode composite layer. The graphite-based anode active material includes artificial graphite and natural graphite. The weight of the artificial graphite in the graphite-based anode active material included in the first anode composite layer is greater than the weight of the natural graphite, and the weight of the natural graphite in the graphite-based anode active material included in the second anode composite layer is greater than the weight of the artificial graphite.

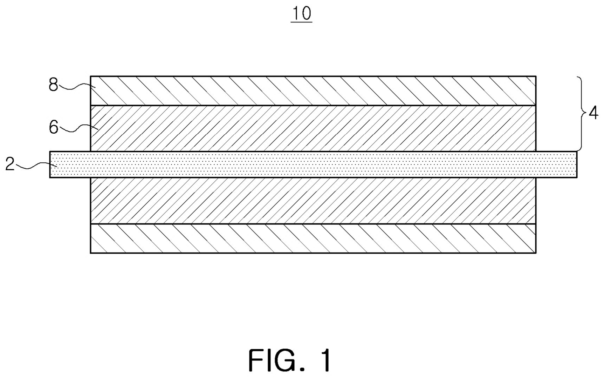

The anode 10 includes an anode current collector 2 and an anode composite layer 4 disposed on at least one surface of the anode current collector 2, and the anode composite layer 4 has a multilayer structure. A cross-sectional structure of an anode is schematically illustrated in FIG. 1. As illustrated in FIG. 1, the anode composite layer 4 may have a multilayer structure, including a first anode composite layer 6 disposed on both surfaces of the anode current collector 2 and a second anode composite layer 8 disposed on the first anode composite layer 6.

Also, although not illustrated in the drawing, as another example, the anode of the present disclosure may further include one or more additional anode composite layers (third anode composite layers) between the first anode composite layer and the second anode composite layer. The third anode composite layer is not particularly limited, but may be a mixture layer including natural graphite and artificial graphite as anode active materials. More specifically, the weight of the natural graphite included in the third anode composite layer may be greater than the weight of the natural graphite included in the first anode composite layer and less than the weight of the natural graphite included in the second anode composite layer.

In the anode, the second anode composite layer may have a thickness equal to or smaller than that of the first anode composite layer, but is not limited thereto. Specifically, the thickness of the second anode composite layer may be 10 to 50% of the total thickness of the anode composite layer.

The thickness of the first anode composite layer may be, but is not limited to, 10 µm or more and 300 µm or less. For example, the first anode composite layer may have a thickness of 10 µm or more, 20 µm or more, 30 µm or more, or 50 µm or more and may also have a thickness of 300 µm or less, 250 µm or less, 200 µm or less, 180 µm or less, 150 µm or less, 120 µm or less, or 100 µm or less.

The anode composite layer of the anode provided in the present disclosure includes artificial graphite and natural graphite. The artificial graphite has a plate-like structure. Due to the structural characteristic, the plate-like artificial graphite has an irregular plate-like structure, with edge portions exposed externally, and thus, a larger surface area is exposed externally than spherical natural graphite, thereby facilitating intercalation and deintercalation of lithium ions, compared to natural graphite. Therefore, including artificial graphite as an anode active material may increase the lithium ion diffusivity, thereby improving rapid charging performance and rapid-charging capacity retention rate.

Also, artificial graphite has a lower swelling ratio than natural graphite. Generally, during battery charge/discharge cycles, the solid electrolyte interface (SEI) film formed on the anode surface may be destroyed by swelling, resulting in continuous electrolyte consumption and gas generation within a cell. However, using artificial graphite, having a low swelling ratio, as an anode active material may reduce electrolyte consumption due to SEI film destruction, thereby reducing gas generation and reducing cell internal pressure.

Meanwhile, while natural graphite is spherically shaped, artificial graphite is irregularly shaped with a plate-like structure. Due to this, the contact points between the active material particles are small, resulting in artificial graphite having lower binding strength, compared to natural graphite. Therefore, if artificial graphite is distributed in large quantities on the electrode surface, artificial graphite may detach from the electrode surface during the rolling process and adhere to the surface of the rolling roll, contaminating the rolling roll and resultantly degrading the surface quality of the anode after the rolling process.

Therefore, by controlling the distribution of artificial graphite and natural graphite in a multilayer anode including both artificial graphite and natural graphite as anode active materials, the electrode may be provided, which improves the rolling processability by the natural graphite, while ensuring battery safety and rapid charging characteristics by the artificial graphite.

The anode provided in the present disclosure includes the first anode composite layer including a significant amount of artificial graphite and the second anode composite layer including a significant amount of natural graphite. According to a preferred embodiment, in the anode, the first anode composite layer includes artificial graphite in an amount greater than 50 wt% based on the total weight of the graphite-based anode active material included in the first anode composite layer, and the second anode composite layer includes natural graphite in an amount greater than 50 wt% based on the total weight of the graphite-based anode active material included in the second anode composite layer.

Specifically, the content of artificial graphite may be greater than 50 wt% based on the total weight of the graphite-based anode active material included in the first anode composite layer, and the content of natural graphite may be greater than 50 wt% based on the total weight of the graphite-based anode active material included in the second anode composite layer.

More specifically, the first anode composite layer may include artificial graphite in an amount of 60 wt% or more, 70 wt% or more, 80 wt% or more, or 90 wt% or more, based on the total weight of the graphite-based anode active material included in the first anode composite layer.

According to a preferred embodiment, the first anode composite layer may not include natural graphite. Specifically, the graphite-based anode active material included in the first anode composite layer may be artificial graphite. That is, 100 wt% of the graphite-based anode active material included in the first anode composite layer may be artificial graphite.

Also, the second anode composite layer may include natural graphite in an amount of 60 wt% or more, 70 wt% or more, 80 wt% or more, or 90 wt% or more, based on the total weight of the graphite-based anode active material included in the second anode composite layer.

According to a preferred embodiment, the second anode composite layer may not include artificial graphite. Specifically, the graphite-based anode active material included in the second anode composite layer may be natural graphite. That is, 100 wt% of the graphite-based anode active material included in the second anode composite layer may be natural graphite.

As such, large quantities of natural graphite on the upper layer (the second anode composite layer), which is the anode surface, may suppress or reduce the contamination caused by anode active material particles on the surface of the rolling roll during the rolling process, thereby improving the rolling processability and contributing to improved anode productivity. Also, large quantities of artificial graphite distributed on the lower layer (the first anode composite layer), which is the anode current collector side, may suppress contamination of the surface of the rolling roll, while improving the rapid charging performance and energy density of lithium secondary batteries.

In a preferred embodiment, the total weight of artificial graphite included in the anode composite layer may be greater than the total weight of natural graphite. Specifically, the anode may include artificial graphite in an amount greater than 50 wt%, 60 wt% or more, or 65 wt% or more, and 90 wt% or less, 80 wt% or less, or 75 wt% or less, based on the graphite-based anode active material included in the entire anode composite layer, including the first and second anode composite layers.

Also, the anode may include natural graphite in an amount less than 50 wt%, 40 wt% or less, or 35 wt% or less, and 10 wt% or more, 20 wt% or more, or 25 wt% or more, based on the graphite-based anode active material included in the entire anode composite layer, including the first and second anode composite layers.

If the content of artificial graphite is 50 wt% or less, the improvement in electrode performance due to the use of artificial graphite may be insufficient. On the other hand, if the content of artificial graphite exceeds 90 wt%, the amount of artificial graphite exposed to the outermost surface of the anode may increase, thereby increasing the likelihood of artificial graphite detaching from the electrode surface during the rolling process, and as a result, the effect of reducing contamination on the surface of the rolling roll may be reduced.

Although not limited thereto, the content of artificial graphite in the first anode composite layer may be 50 wt% or more, 70 wt% or more, 90 wt% or more, 99 wt% or more, or 100 wt% of artificial graphite in the entire anode composite layer. In addition, the content of natural graphite included in the second anode composite layer may be 50 wt% or more, 70 wt% or more, 90 wt% or more, 99 wt% or more, or 100 wt% of natural graphite included in the entire anode composite layer.

In some embodiments, the thickness of the first anode composite layer may be equal to or greater than the thickness of the second anode composite layer. For example, the thickness of the second anode composite layer may be 10 to 50% of the total thickness of the anode, including the first and second anode composite layers. For example, the thickness ratio of the first anode composite layer to the second anode composite layer may be 9:1 to 5:5, or 9:1 to 7:3.

In some embodiments, the loading weight of the first anode composite layer may be greater than the loading weight of the second anode composite layer. For example, the ratio of the loading weight of the first anode composite layer may be 70 to 95% of the total loading weight of the first and second anode composite layers, and the ratio of the loading weight of the second anode composite layer may be 5 to 30% of the total loading weight of the first and second anode composite layers.

In some embodiments, the loading weight of the first anode composite layer may be 5 to 15 mg/cm². Specifically, the loading weight of the first anode composite layer may be 7 mg/cm² or greater or 9 mg/cm² or greater and 12 mg/cm² or less or 10 mg/cm² or less.

In some embodiments, the loading weight of the second anode composite layer may be 0.5 to 5 mg/cm². Specifically, the loading weight of the second anode composite layer may be 0.7 mg/cm² or greater, 1 mg/cm² or greater, and 4 mg/cm² or less, or 2 mg/cm² or less.

Based on the total loading weight of the first anode composite layer and the second anode composite layer, the ratio of the loading weight of the first anode composite layer to the second anode composite layer may be 70:30 to 95:5 or 70:30 to 90:10.

As described above, by forming the loading weight of the first anode composite layer, including a large amount of artificial graphite, at a higher level, the lithium ion diffusion coefficient may be increased, thereby improving rapid-charging performance and cycle performance.

Meanwhile, by incorporating the second anode composite layer including a large amount of natural graphite on the outer surface of the electrode, even when the rolling process is performed by applying high pressure during the anode manufacturing process to achieve a high-density anode, the bonding strength may be high, and thus, the detachment of active material particles from the anode surface may be reduced and contamination on the surface of the rolling roll may be reduced. Also, the high bonding strength allows the same anode density to be achieved with less pressure during the rolling process.

An example of an anode including natural graphite and artificial graphite as the anode active material in the anode composite layer is illustrated in FIG. 2. FIG. 2 illustrates various examples of anodes having the anode composite layer 4 including natural graphite and artificial graphite on the anode current collector 2, showing examples of an anode in which the content ratios of natural graphite and artificial graphite included in the anode composite layer 4 are the same and the distribution patterns of the artificial graphite and natural graphite are different.

Specifically, A of FIG. 2 illustrates an example of a multilayer anode in which the anode composite layer 4 includes the first anode composite layer 6 formed of artificial graphite and the second anode composite layer 8 formed of natural graphite, and B of FIG. 2 illustrates an example of an anode in which the anode composite layer 4 includes the first anode composite layer formed of artificial graphite and the second anode composite layer including a mixture of artificial graphite and natural graphite. The anodes illustrated in A and B of FIG. 2 include a large amount of artificial graphite, thereby enhancing rapid charging performance and improving battery cycling performance. Also, the inclusion of a large amount of natural graphite in the outer surface layer may suppress contamination of the rolling roll in the rolling process during anode manufacturing, thereby improving the surface quality of the anode.

C of FIG. 2 illustrates a comparative example of an anode having a single anode composite layer 4 including a mixture of artificial graphite and natural graphite. This anode has a similar content ratio of artificial graphite to natural graphite to that of the anodes illustrated in A and B of FIG. 2. However, in this anode, a large amount of artificial graphite is distributed on the outer surface of the anode active material layer, and the artificial graphite may adhere to the surface of the rolling roll during the rolling process to cause contamination of the surface of the rolling roll, thereby degrading the surface quality of the anode.

The anode composite layer may include a silicon-based anode active material in addition to the graphite-based anode active material described above. Including the silicon-based anode active material may provide enhanced capacity characteristics and the silicon-based anode active material may be included in at least one of the first and second anode composite layers, for example, the first anode composite layer.

The silicon-based anode active material may include, for example, Si, SiOx (0<x<2), metal-doped SiOx, or a silicon-carbon composite. The metal in the metal-doped SiOx may include lithium and/or magnesium, and the metal-doped SiOx may include a metal silicate.

Although not limited thereto, the silicon-based anode active material may be included in an amount of 3 to 40 wt% of the total weight of the anode composite layer.

In addition to graphite-based and silicon-based anode active materials, the anode composite layer may further include a third anode active material, for example, carbon-based materials, such as hard carbon, soft carbon, coke, mesocarbon microbeads (MCMB), mesophase pitch-based carbon fiber (MPCF), and carbon composites; lithium metal; lithium alloys; or tin (Sn)-containing materials.

The lithium metal may be pure lithium metal or lithium metal with a protective layer formed thereon to suppress dendrite growth. Elements included in the lithium alloy may include aluminum, zinc, bismuth, cadmium, antimony, silicon, lead, tin, gallium, or indium.

For example, the anode active materials may be mixed in a solvent to prepare a first anode composite slurry for forming the first anode composite layer and a second anode composite slurry for forming the second anode composite layer. The first and second anode composite slurries may be coated/deposited onto the anode current collector, followed by drying and rolling to produce the first and second anode composite layers.

The anode current collector is commonly used in the manufacture of anodes for secondary batteries, and any anode current collector that is conductive and does not induce chemical changes within batteries may be used without particular limitations.

For example, the anode current collector may be formed of copper, stainless steel, aluminum, nickel, titanium, calcined carbon, copper or stainless steel surface-treated with carbon, nickel, titanium, silver, or other materials, or an aluminum-cadmium alloy. In addition, the binding strength of the anode active material may be strengthened by forming fine surface irregularities on the surface, and various forms, such as a film, sheet, foil, net, porous material, foam, or non-woven fabric, etc., may be used. The anode current collector 2 may have a thickness of, for example, 10 to 50 µm, but is not limited thereto.

The process of coating the anode current collector with the anode composite slurry may be performed using, but is not limited to, gravure coating, slot die coating, multi-layer simultaneous die coating, imprinting, doctor blade coating, dip coating, bar coating, or casting.

In some embodiments, the anode may include an anode active material layer in the form of lithium metal formed through a deposition/coating process.

Specifically, the coating may be performed by simultaneously coating and drying the first anode composite slurry and the second anode composite slurry, or by coating the second anode composite slurry after applying the first anode composite slurry, or by applying and drying the second anode composite slurry after applying and drying the first anode composite slurry.

Non-limiting examples of solvents for the anode composite slurry may include water, pure water, deionized water, distilled water, ethanol, isopropanol, methanol, acetone, n-propanol, t-butanol, and the like.

The anode composite slurry may further include a binder and optionally, additives, such as a conductive agent, a thickener, or a dispersant.

The binder may include polyvinylidene fluoride (PVDF), vinylidene fluoride-co-hexafluoropropylene copolymer, polyacrylonitrile, polymethylmethacrylate, acrylonitrile butadiene rubber (NBR), polybutadiene rubber (BR), styrene-butadiene rubber (SBR), etc. In a preferred embodiment, a styrene-butadiene rubber (SBR)-based binder, carboxymethyl cellulose (CMC), a polyacrylic acid-based binder, a poly(3,4-ethylenedioxythiophene, PEDOT)-based binder, etc., may be used as the anode binder.

The binder may be included in an amount of about 1.2 to about 5 wt% based on the total weight of the anode composite layer.

The conductive agent may be added to enhance the conductivity and/or mobility of lithium ions or electrons of the anode composite layer. For example, the conductive agent may include, but is not limited to, carbon-based conductive agents, such as graphite, carbon black, acetylene black, Ketjen black, graphene, carbon nanotubes, vapor-grown carbon fiber (VGCF), and carbon fiber, and/or metal-based conductive agents including perovskite materials, such as tin, tin oxide, titanium oxide, LaSrCoO₃, and LaSrMnO₃.

In a preferred embodiment, the conductive agent may be included in an amount of about 0.05 to about 3 wt% based on the total weight of the anode composite layer.

If necessary, the anode composite layer may further include a thickener and/or a dispersant. In a preferred embodiment, the anode composite layer may include a thickener, such as carboxymethyl cellulose (CMC) .

After applying the anode composite slurry onto the anode current collector, a rolling process may be performed, and the rolling process may be performed, for example, using a rolling roll.

As described above, in the anode according to a preferred embodiment of the present disclosure, the anode composite layer, which is disposed on the outer surface of the anode composite layer, includes a large amount of natural graphite with excellent bonding strength. This layer reduces the phenomenon of natural graphite detaching from the anode during the rolling process, thereby suppressing contamination of the rolling roll. Therefore, a higher pressure may be applied during the rolling process to produce a higher-density anode.

Meanwhile, as described above, natural graphite has high bonding strength, which reduces contamination of the rolling roll. However, to achieve the same composite density, a higher-pressure rolling process may be required, compared to artificial graphite. However, if natural graphite is distributed in large quantities on the surface of the anode composite layer and artificial graphite is distributed in large quantities inside the anode composite layer, the same composite density may be achieved at a lower pressure during rolling.

Therefore, by distributing natural graphite on the electrode surface facing the rolling roll as in a preferred embodiment of the present disclosure, roll contamination may be prevented by the characteristics of natural graphite providing the high bonding strength, while reducing the line pressure (ton/cm) during rolling, thereby improving the economic efficiency of the process. In addition, the occurrence of defects on the anode surface that may be caused by applying high pressure to achieve a high composite density may be reduced.

According to another aspect of the present disclosure, a lithium secondary battery including the anode may be provided. Specifically, a lithium secondary battery according to a preferred embodiment includes the anode for a lithium secondary battery according to any one of the embodiments described above.

For example, the lithium secondary battery may include a cathode (or a negative electrode) in addition to the anode described above, and a separator may be included between the anode and the cathode.

The cathode may include a cathode current collector and a cathode composite layer disposed on at least one surface of the cathode current collector.

The cathode current collector may include stainless steel, nickel, aluminum, titanium, or alloys thereof. The cathode current collector may also include aluminum or stainless steel surface-treated with carbon, nickel, titanium, or silver. The cathode current collector may have a thickness of, for example, 10 to 50 µm, but is not limited thereto.

The cathode composite layer may include a cathode active material. The cathode active material may include a compound capable of reversibly intercalating and deintercalating lithium ions.

According to some embodiments, the cathode active material may include a lithium-nickel metal oxide. The lithium-nickel metal oxide may further include at least one of cobalt (Co), manganese (Mn), and aluminum (Al).

In some embodiments, the cathode active material or the lithium-nickel metal oxide may include a layered structure or crystal structure represented by Chemical Formula 1 below:

[Chemical Formula 1] LiₓNiₐM_{b}O_{2+z}

In Chemical Formula 1, 0.9≤x≤1.2, 0.6≤a≤0.99, 0.01≤b≤0.4, - 0.5≤z≤0.1. As described above, M may include Co, Mn, and/or Al.

The chemical structure represented by Chemical Formula 1 represents the bonding relationship included in the layered structure or crystal structure of the cathode active material and does not exclude other additional elements. For example, M includes Co and/or Mn, and Co and/or Mn may serve as the main active element of the cathode active material together with Ni. Chemical Formula 1 is provided to express the bonding relationship of the main active elements and should be understood as encompassing the introduction and substitution of additional elements.

In a preferred embodiment, auxiliary elements may be further included in addition to the main active element to enhance the chemical stability of the cathode active material or the layered structure/crystal structure. The auxiliary elements may be incorporated into the layered structure/crystal structure to form bonds, and in this case, it should be understood that the auxiliary elements are included within the chemical structure range represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr. The auxiliary element may also function as an auxiliary active element contributing to the capacity/output activity of the cathode active material, such as Al, together with Co or Mn.

For example, the cathode active material or the lithium-nickel metal oxide may include a layered structure or crystal structure represented by the Chemical Formula 1-1 below:

[Chemical Formula 1-1] LiₓNiₐM1_{b1}M2_{b2}O_{2+z}

In Chemical Formula 1-1, M1 may include Co, Mn, and/or Al. M2 may include the auxiliary elements described above. In Chemical Formula 1-1, 0.9≤x≤1.2, 0.6≤a≤0.99, 0.01≤b1+b2≤0.4, -0.5≤z≤0.1.

The cathode active material may further include a coating element or a doping element. For example, elements substantially the same as or similar to the auxiliary elements described above may be used as the coating element or doping element. For example, a single element or a combination of two or more of the above elements may be used as a coating element or a doping element.

The coating element or doping element may be present on the surface of the lithium-nickel metal oxide particle or may penetrate through the surface of the lithium-nickel metal oxide particle and be included in the bonding structure represented by Chemical Formula 1 or Chemical Formula 1-1.

The cathode active material may include a nickel-cobalt-manganese (NCM)-based lithium oxide. In this case, an NCM-based lithium oxide with an increased nickel content may be used.

Ni is a transition metal associated with the output and capacity of a lithium secondary battery. Ni may be provided as a transition metal. Therefore, by employing a high-Ni composition as described above in the cathode active material, a high-capacity cathode and a high-capacity lithium secondary battery may be provided.

However, as the Ni content increases, the long-term storage stability and lifespan stability of the cathode or secondary battery may be relatively reduced, and side reactions with the electrolyte may also increase. However, according to embodiments, the inclusion of Co may maintain electrical conductivity, while improving lifespan stability and capacity retention characteristics through Mn.

The Ni content (e.g., the mole fraction of nickel out of the total moles of nickel, cobalt, and manganese) in the NCM-based lithium oxide may be 0.6 or greater, 0.7 or greater, or 0.8 or greater. In some embodiments, the Ni content may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a Mn-rich active material, a Li-rich layered oxide (LLO)/over-lithiated oxide (OLO) active material, or a Co-less active material having a chemical structure or crystal structure represented by Chemical Formula 2.

[Chemical Formula 2] p[Li₂MnO₃]·(1-p)[Li_{q}JO₂]

In Chemical Formula 2, 0<p<1, 0.9≤q≤1.2, and J may include at least one element selected from Mn, Ni, Co, Fe, Cr, V, Cu, Zn, Ti, Al, Mg, and B.

For example, the cathode active material may be mixed in a solvent to prepare a cathode composite slurry. The cathode composite slurry may be coated on a cathode current collector, followed by drying and rolling to prepare a cathode composite layer.

The coating process may be performed using methods, such as gravure coating, slot die coating, multilayer simultaneous die coating, imprinting, doctor blade coating, dip coating, bar coating, and casting, but is not limited thereto.

Non-limiting examples of solvents used in the preparation of the cathode composite include N-methyl-2-pyrrolidone (NMP), dimethylformamide, dimethylacetamide, N,N-dimethylaminopropylamine, ethylene oxide, and tetrahydrofuran.

The cathode composite layer may further include a binder. The binder may include polyvinylidene fluoride (PVDF), vinylidene fluoride-co-hexafluoropropylene copolymer, polyacrylonitrile, polymethylmethacrylate, acrylonitrile butadiene rubber (NBR), polybutadiene rubber (BR), styrene-butadiene rubber (SBR), etc. In a preferred embodiment, a PVDF-based binder may be used as the cathode binder.

The cathode composite layer may optionally further include a conductive agent. The conductive agent may be added to enhance the conductivity and/or mobility of lithium ions or electrons of the cathode composite layer. For example, the conductive agent may include, but is not limited to, carbon-based conductive agents, such as graphite, carbon black, acetylene black, Ketjen black, graphene, carbon nanotubes, a vapor-grown carbon fiber (VGCF), carbon fiber, and/or metal-based conductive agents including perovskite materials, such as tin, tin oxide, titanium oxide, LaSrCoO₃, LaSrMnO₃.

The cathode composite layer may optionally include additives, such as a thickener or dispersant. In a preferred embodiment, the cathode composite layer may include a thickener, such as carboxymethyl cellulose (CMC).

An electrode assembly may be manufactured by interposing a separator between the cathode and anode. The separator may be configured to prevent an electrical short-circuit between the cathode and anode and to allow ion flow.

For example, the separator may include a porous polymer film or a porous nonwoven fabric. The porous polymer film may include polyolefin-based polymers, such as an ethylene polymer, a propylene polymer, an ethylene/butene copolymer, an ethylene/hexene copolymer, and an ethylene/methacrylate copolymer. The porous nonwoven fabric may include high-melting-point glass fibers, polyethylene terephthalate fibers, but is not limited thereto. The separator may also include a ceramic material. For example, inorganic particles may be coated on or dispersed within the polymer film to improve heat resistance.

The separator may have a monolayer or multilayer structure including the polymer film and/or the nonwoven fabric described above. In a specific embodiment, the thickness of the separator may be 10 µm to 20 µm, but the present disclosure is not limited thereto.

According to embodiments, an electrode assembly formed by repeatedly arranging a cathode, an anode, and a separator may be formed in a winding type, a stacking type, a zigzag folding type or, a stack-folding type.

The electrode assembly may be accommodated in a case together with an electrolyte to define a lithium secondary battery. According to embodiments, a non-aqueous electrolyte may be used as the electrolyte.

The non-aqueous electrolyte includes a lithium salt as an electrolyte and an organic solvent. The lithium salt is expressed as, for example, Li⁺X⁻, and the anion (X⁻) of the lithium salt may be F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻ 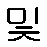 (CF₃CF₂SO₂)₂N⁻.

The organic solvent may include an organic compound having sufficient solubility in the lithium salt and additives and being nonreactive within the battery. Examples of the organic solvent may include at least one of a carbonate solvent, an ester solvent, an ether solvent, a ketone solvent, an alcohol solvent, and an aprotic solvent. Examples of the organic solvent may include propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), and 2-methyltetrahydrofuran, ethyl alcohol, isopropyl alcohol, dimethylsulfoxide, acetonitrile, diethoxyethane, sulfolane, gamma-butyrolactone, and propylene sulfite. These may be used alone or in combination of two or more.

The non-aqueous electrolyte may further include additives. The additives may include, for example, cyclic carbonate compounds, fluorine-substituted carbonate compounds, sultone compounds, cyclic sulfate compounds, cyclic sulfite compounds, phosphate compounds, and borate compounds.

The cyclic carbonate compounds may include vinylene carbonate (VC), vinyl ethylene carbonate (VEC), and the like.

The fluorine-substituted carbonate compounds may include fluoroethylene carbonate (FEC), etc.

The sultone compounds may include 1,3-propane sultone, 1,3-propene sultone, 1,4-butane sultone, etc.

The cyclic sulfate compounds may include 1,2-ethylene sulfate, 1,2-propylene sulfate, etc.

The cyclic sulfite compounds may include ethylene sulfite, butylene sulfite, etc.

The phosphate compounds may include lithium difluoro bis-oxalato phosphate, lithium difluoro phosphate, etc.

The borate compound may include lithium bis(oxalate) borate, etc.

According to another aspect of the present disclosure, a method for manufacturing an anode for a lithium secondary battery, including: applying a first anode composite slurry including a graphite-based anode active material on at least one surface of an anode current collector; applying a second anode composite slurry including a graphite-based anode active material on the applied first anode composite slurry; drying the applied first and second anode composite slurries to form a first anode composite layer and a second anode composite layer; and rolling the first and second anode composite layers, wherein the graphite-based anode active material includes artificial graphite and natural graphite, the weight of artificial graphite in the graphite-based anode active material included in the first anode composite layer is greater than the weight of the natural graphite, and the weight of natural graphite in the graphite-based anode active material included in the second anode composite layer is greater than the weight of artificial graphite, may be provided.

Detailed descriptions of the anode current collector 2, the graphite-based anode active material, the first anode composite slurry, the second anode composite slurry, the first anode composite layer 6, the second anode composite layer 8, artificial graphite, and natural graphite overlap the contents described above and are therefore omitted.

According to a preferred embodiment, the rolling operation may be performed at a line pressure of 0.50 to 1.20 ton/cm.

Specifically, the rolling operation may be performed at a line pressure of 0.55 ton/cm or 0.60 ton/cm or more, or at a line pressure of 1.00 ton/cm or 0.80 ton/cm or less.

### Examples

Hereinafter, embodiments of the present disclosure will be further described with reference to specific experimental examples. The examples and comparative examples included in the experimental examples are intended to illustrate the present disclosure and do not limit the scope of the appended claims. It will be apparent to those skilled in the art that various modifications and variations of the examples are possible within the scope and technical spirit of the present disclosure, and such modifications and variations are also within the scope of the appended claims.

### Example 1

### (First Anode Composite layer)

First anode composite was prepared by mixing artificial graphite (AG) as an anode active material, carbon black (CB) as a conductive agent, and carboxymethyl cellulose (CMC) and styrene-butadiene rubber (SBR) as binders in the weight ratios illustrated in Table 1.

The first anode composite was added to water to prepare a first anode composite slurry with a solid content of 48%. The first anode composite slurry was applied to both sides of an anode current collector formed of copper foil (thickness: 8 µm) and dried to produce a first anode composite layer with a loading weight of 9.18 mg/cm².

### (Second Anode Composite layer)

A second anode composite was prepared by mixing natural graphite (NG) as an anode active material, carbon black (CB) as a conductive agent, and carboxymethyl cellulose (CMC) and styrene-butadiene rubber (SBR) as binders in the weight ratios illustrated in Table 1.

The second anode composite was added to water to produce a second anode composite slurry with a solid content of 48%. The second anode composite slurry was applied onto the first anode composite layer and dried to produce a second anode composite layer with a loading weight of 1.02 mg/cm² (the ratio of loading weight of the first anode composite layer and the second anode composite layer = 9:1).

### (Anode Preparation)

The anode, manufactured as described above and having an anode composite layer with a total loading weight of 10.2 mg/cm², was rolled using a rolling roll to produce a dual-layer anode having a dual-layer structure in which the thickness was 128 µm and the density was 1.7 g/cc (g/cm³).

### (Evaluation)

### Line Pressure During Rolling

The results of measuring the line pressure (force per unit length in the rolling roll axis direction) required during the aforementioned rolling process are illustrated in Table 1.

### Rolling Roll Contamination

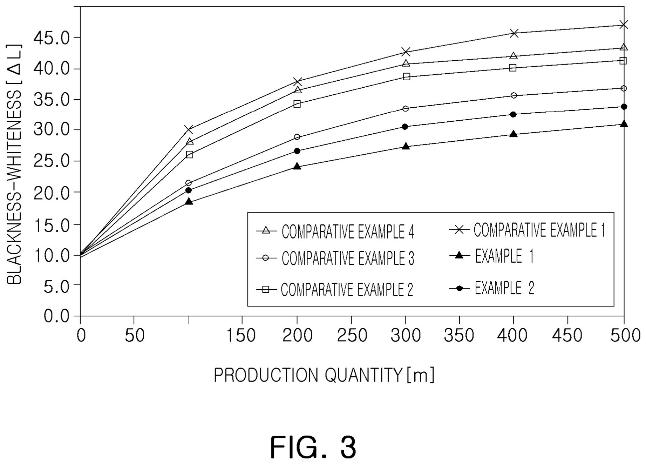

To evaluate the degree of contamination of the rolling roll according to the rolling process, the blackness-whiteness (ΔL) was measured on the surface of the rolling roll after the rolling process. The results are illustrated in Table 1 and FIG. 3.

The blackness-whiteness of the rolling roll was measured at the same location using a colorimeter (VISKO CR-400). Specifically, while manufacturing the anode over a length of 50 m, the blackness-whiteness was measured at the same position on the surface of the rolling roll every 50 m (see FIG. 3). The blackness-whiteness was measured by placing the colorimeter device in close contact with the rolling roll. The blackness-whiteness values of the rolling rolls obtained when the anode was rolled for 500 m are illustrated in Table 1.

### Example 2

A two-layer anode was manufactured using the same method as in Example 1, except that the loading weights of the first and second anode composite layers were adjusted as illustrated in Table 1.

The line pressure and blackness-whiteness of the manufactured anode were measured during rolling, and the results are illustrated in Table 1 and FIG. 3.

### Comparative Example 1

A two-layer anode, as illustrated in Table 1, was manufactured using the same method as Example 1, except that the first anode composite layer was manufactured using the second anode composite slurry of Example 1, and the second anode composite layer was manufactured using the first anode composite slurry of Example 1.

The line pressure and blackness-whiteness of the manufactured anode were measured during rolling, and the results are illustrated in Table 1 and FIG. 3.

### Comparative Examples 2 to 4

Anode composite was manufactured by mixing a mixture of natural graphite (NG) and artificial graphite (AG) as an anode active material, carbon black (CB) as a conductive agent, and carboxymethyl cellulose (CMC) and styrene-butadiene rubber (SBR) as binders in the weight ratios illustrated in Table 1.

The aforementioned anode composite was added to water to produce an anode composite slurry with a solid content of 48%. The anode composite slurry was applied to both sides of an anode collector (8 µm thick) of copper foil and dried to produce a single-layer anode composite layer.

The anode with the single-layer anode composite layer was rolled using a rolling roller to produce a single-layer anode with a thickness of 128 µm and a density of 1.7 g/cc (g/cm³).

The line pressure and blackness-whiteness of the manufactured anode were measured during rolling, and the results are illustrated in Table 1 and FIG. 3.

**[Table 1]**

| Classification | | | | Example | | Comparative Example | | | |
|---|---|---|---|---|---|---|---|---|---|
| | | | | 1 | 2 | 1 | 2 | 3 | 4 |
| | | | | Dua l lay er | Dual lay er | Dua l lay er | Sing le laye r | Sing le laye r | Sing le laye r |
| | | Active materia l | NG | - | - | 96. 3 | 9.63 | 28.8 9 | - |
| | Compos ition (wt%) | | AG | 96. 3 | 96. 3 | - | 86.6 7 | 67.4 1 | 96.3 |
| First anode composite layer (lower layer) | | | NG :A G | 0:1 00 | 0:1 00 | 100 :0 | 10:9 0 | 30:7 0 | 0:10 0 |
| | | CB | | 1.0 | 1.0 | 1.0 | 1.0 | 1.0 | 1.0 |
| | | CMC | | 1.2 | 1.2 | 1.2 | 1.2 | 1.2 | 1.2 |
| | | SBR | | 1.5 | 1.5 | 1.5 | 1.5 | 1.5 | 1.5 |
| | Loading weight (mg/ cm²) | | | 9.1 8 | 7.1 4 | 9.1 8 | - | - | - |
| | Ratio (%) | | | 90 | 70 | 90 | - | - | - |
| | | Active materia l | NG | 96. 8 | 96. 8 | - | - | - | - |
| | Compos ition (wt%) | | AG | - | - | 96. 8 | - | - | - |
| Second anode composite layer (upper layer) | | | NG :A G | 100 : 0 | 100 : 0 | 0:1 00 | - | - | - |
| | | CB | | 1 | 1 | 1 | - | - | - |
| | | CMC | | 1.2 | 1.2 | 1.2 | - | - | - |
| | | SBR | | 1.5 | 1.5 | 1.5 | - | - | - |
| | Loading weight (mg/ cm²) | | | 1.0 2 | 3.0 6 | 1.0 2 | - | - | - |
| | Ratio (%) | | | 10 | 30 | 10 | - | - | - |
| Anode | Loading weight (mg/ cm²) | | | 10. 2 | 10. 2 | 10. 2 | 10.2 | 10.2 | 10.2 |
| | Rolling thickness (*µ*m) | | | 128 | 128 | 128 | 128 | 128 | 128 |
| | | | Rolling density (g/cc) | 1.7 | 1.7 | 1.7 | 1.7 | 1.7 | 1.7 |
| | | | Rolling line pressure (Ton/cm) | 0.6 | 0.6 6 | 0.8 3 | 0.6 | 0.66 | 0.52 |
| | | | Blackness-whiteness (Production quantity: 500 m) | 31. 2 | 33. 9 | 47. 3 | 41.5 | 37.1 | 43.6 |

In Table 1, the ratio (%) represents the percentage of the loading weight of each layer relative to the total loading weight of the first and second anode composite layers.

Referring to Table 1 and FIG. 3, it can be seen that, the anodes of Examples 1 and 2, in which the weight of artificial graphite in the graphite-based anode active material included in the first anode composite layer was greater than that of natural graphite and the weight of natural graphite in the graphite-based anode active material included in the second anode composite layer was greater than that of artificial graphite, exhibited lower blackness-whiteness of the rolling roll, compared to the anodes of Comparative Examples 1 to 4, and thus, the contamination of the surface of rolling equipment, such as the rolling roll, may be improved, and the electrodes may be further densified.

Referring specifically to FIG. 3, the degree of contamination on the roll surface increases as the rolling process is repeated. However, the anodes of Examples 1 and 2 exhibited a lower blackness-whiteness value than the blackness-whiteness of the rolling roll observed when the anode of Comparative Example 3 was rolled for 300 m, despite rolling for 500 m. This demonstrates that the anodes of Examples 1 and 2 exhibit excellent contamination reduction effects on the rolling roll, thereby significantly improving anode productivity.

Regarding the single-layer anodes of Comparative Examples 2 to 4, the degree of contamination on the rolling roll increased as the amount of artificial graphite, which has relatively low electrode binding strength, increased (Comparative Example 4 > Comparative Example 2 > Comparative Example 3). Also, it can be seen that, as the amount of natural graphite having a relatively high swelling ratio increased, the line pressure required during rolling increased (Comparative Example 3 > Comparative Example 2 > Comparative Example 4).

In contrast, the anodes of Examples 1 and 2 are dual-layer anodes, including the second anode composite layer including only natural graphite as the anode active material on the anode surface (the upper layer) and the first anode composite layer including only artificial graphite as the anode active material inside the anode (the lower layer) which is the anode current collector side, and the ratio of the anode active material within the entire anode is the same as in Comparative Examples 2 and 3, respectively. However, in terms of the degree of contamination of the rolling roll, the blackness-whiteness values of Examples 1 and 2 were 31.2 and 33.9, respectively, significantly improved compared to 41.5 and 37.1 in Comparative Examples 2 and 3.

Therefore, even if the anodes include a mixture of artificial and natural graphite, it is considered difficult to suppress contamination on the surface of the rolling equipment and design a high-density electrode with a single-layer structure, as in Comparative Examples 2 to 4.

Meanwhile, the anode of Comparative Example 1 having a dual-layer structure is an anode including the first anode composite layer including only natural graphite as the anode active material on the anode current collector side which is the inside (lower layer) and the second anode composite layer including only artificial graphite as the anode active material on the surface (upper layer) of the anode.

However, the anode of Comparative Example 1 required a significantly high line pressure of 0.83 tons/cm to manufacture an anode with the same thickness and rolling density. Also, the rolling roll had a blackness-whiteness of 47.3, resulting in severe contamination of the surface of rolling equipment. This is believed to be due to the fact that the first anode composite layer including only natural graphite having a relatively high swelling ratio, as the anode active material, is disposed on the anode current collector side, which is the inside (lower layer), while the second anode composite layer including only artificial graphite having a relatively low electrode binding strength, as the anode active material, is disposed on the surface (upper layer) of the anode.

Therefore, designing an anode with the composition and structure as in Examples 1 and 2 may effectively improve contamination of the surface of the rolling equipment, thereby providing a high-density anode for lithium secondary batteries.

According to a preferred embodiment of the present disclosure, contamination of the surface of rolling equipment, such as rolling rolls, may be suppressed.

According to another embodiment of the present disclosure, the shutdown of the equipment for cleaning the surface of the rolling equipment may be minimized.

According to another embodiment of the present disclosure, rolling processability may be improved and electrode productivity may be enhanced.

According to another embodiment of the present disclosure, a high-energy-density electrode may be realized by increasing the pressure applied to the electrode during the rolling process in the electrode manufacturing process.

According to another embodiment of the present disclosure, the rapid charging performance of the battery may be improved.

The electrode of the present disclosure may be widely applied as an anode in green technology fields, such as electric vehicles, battery charging stations, and other battery-powered solar and wind power generation. Also, the electrode of the present disclosure may be used in eco-friendly electric vehicles, hybrid vehicles, and other vehicles that aim to prevent climate change by suppressing air pollution and greenhouse gas emissions.

Only specific examples of implementations of certain embodiments are described. Variations, improvements and enhancements of the disclosed embodiments and other embodiments may be made based on the disclosure of this patent document.

The present disclosure may also relate to the following numbered aspects:
Aspect 1) An anode for a lithium secondary battery, the anode comprising: an anode current collector; and an anode composite layer disposed on at least one surface of the anode current collector and including a graphite-based anode active material, wherein the anode composite layer includes: a first anode composite layer disposed on the anode current collector; and a second anode composite layer disposed on the first anode composite layer, the graphite-based anode active material includes artificial graphite and natural graphite, a weight of artificial graphite in the graphite-based anode active material included in the first anode composite layer is greater than a weight of natural graphite, and a weight of natural graphite in the graphite-based anode active material included in the second anode composite layer is greater than a weight of artificial graphite.
Aspect 2) In Aspect 1, wherein a content of artificial graphite may be greater than 50 wt% based on a total weight of the graphite-based anode active material included in the first anode composite layer.
Aspect 3) In Aspect 1 or 2, wherein the first anode composite layer may not include natural graphite.
Aspect 4) In Aspect 1 to 3, wherein the graphite-based anode active material included in the first anode composite layer may be artificial graphite.
Aspect 5) In Aspect 1 to 4, wherein a content of natural graphite may be greater than 50 wt% based on a total weight of the graphite-based anode active material included in the second anode composite layer.
Aspect 6) In Aspect 1 to 5, wherein the second anode composite layer may not include artificial graphite.
Aspect 7) In Aspect 1 to 6, wherein the graphite-based anode active material included in the second anode composite layer may be natural graphite.
Aspect 8) In Aspect 1 to 7, wherein a total weight of artificial graphite included in the anode composite layer may be greater than a total weight of natural graphite.
Aspect 9) In Aspect 1 to 8, wherein, based on the graphite-based anode active material included in the entire anode composite layer including the first anode composite layer and the second anode composite layer, (a) artificial graphite may be included in an amount of 60 wt% or more and 90 wt% or less; and/or (b) natural graphite may be included in an amount of 10 wt% or more and 40 wt% or less.
Aspect 10) In Aspect 1 to 9, wherein a loading weight of the first anode composite layer may be greater than a loading weight of the second anode composite layer.
Aspect 11) In Aspect 10, wherein (a) a ratio of the loading weight of the first anode composite layer may be 70 to 95% based on a total loading weight of the first anode composite layer and the second anode composite layer; and/or (b) a ratio of the loading weight of the second anode composite layer may be 5 to 30% based on the total loading weight of the first anode composite layer and the second anode composite layer.
Aspect 12) In Aspect 1 to 11, wherein a thickness of the second anode composite layer may be 10 to 50% of a thickness of the entire anode composite layer.
Aspect 13) A lithium secondary battery including the anode for a lithium secondary battery of any one of Aspects 1 to 12.
Aspect 14) A method for manufacturing an anode for a lithium secondary battery, the method comprising: applying a first anode composite slurry including a graphite-based anode active material to at least one surface of an anode current collector; applying a second anode composite slurry including a graphite-based anode active material to the applied first anode composite slurry; drying the applied first and second anode composite slurries to form a first anode composite layer and a second anode composite layer; and rolling the first and second anode composite layers, wherein the graphite-based anode active material includes artificial graphite and natural graphite, a weight of artificial graphite in the graphite-based anode active material included in the first anode composite layer is greater than a weight of natural graphite, and a weight of natural graphite in the graphite-based anode active material included in the second anode composite layer is greater than a weight of artificial graphite.
Aspect 15) In Aspect 16, wherein the rolling may be performed at a line pressure of 0.50 to 1.20 Ton/cm.

## Claims

1. An anode for a lithium secondary battery, the anode comprising:
an anode current collector; and an anode composite layer disposed on at least one surface of the anode current collector and including a graphite-based anode active material,
wherein the anode composite layer includes: a first anode composite layer disposed on the anode current collector; and a second anode composite layer disposed on the first anode composite layer,
wherein
the graphite-based anode active material includes artificial graphite and natural graphite,
a weight of artificial graphite in the graphite-based anode active material included in the first anode composite layer is greater than a weight of natural graphite, and
a weight of natural graphite in the graphite-based anode active material included in the second anode composite layer is greater than a weight of artificial graphite.

2. The anode of claim 1, wherein a content of artificial graphite is greater than 50 wt% based on a total weight of the graphite-based anode active material included in the first anode composite layer.

3. The anode of claim 1 or 2, wherein the first anode composite layer does not include natural graphite.

4. The anode of any one of claims 1 to 3, wherein the graphite-based anode active material included in the first anode composite layer is artificial graphite.

5. The anode of any one of claims 1 to 4, wherein a content of natural graphite is greater than 50 wt% based on a total weight of the graphite-based anode active material included in the second anode composite layer.

6. The anode of any one of claims 1 to 5, wherein the second anode composite layer does not include artificial graphite.

7. The anode of any one of claims 1 to 6, wherein the graphite-based anode active material included in the second anode composite layer is natural graphite.

8. The anode of any one of claims 1 to 7, wherein a total weight of artificial graphite included in the anode composite layer is greater than a total weight of natural graphite.

9. The anode of any one of claims 1 to 8, wherein, based on the graphite-based anode active material included in the entire anode composite layer including the first anode composite layer and the second anode composite layer, (a) artificial graphite is included in an amount of 60 wt% or more and 90 wt% or less; and/or
(b) natural graphite is included in an amount of 10 wt% or more and 40 wt% or less.

10. The anode of any one of claims 1 to 9, wherein a loading weight of the first anode composite layer is greater than a loading weight of the second anode composite layer.

11. The anode of claim 10, wherein (a) a ratio of the loading weight of the first anode composite layer is 70 to 95% based on a total loading weight of the first anode composite layer and the second anode composite layer; and/or
(b) a ratio of the loading weight of the second anode composite layer is 5 to 30% based on the total loading weight of the first anode composite layer and the second anode composite layer.

12. The anode of any one of claims 1 to 11, wherein a thickness of the second anode composite layer is 10 to 50% of a thickness of the entire anode composite layer.

13. A lithium secondary battery including the anode for a lithium secondary battery of any one of claims 1 to 12.

14. A method for manufacturing an anode for a lithium secondary battery, the method comprising:
applying a first anode composite slurry including a graphite-based anode active material to at least one surface of an anode current collector;
applying a second anode composite slurry including a graphite-based anode active material to the applied first anode composite slurry;
drying the applied first and second anode composite slurries to form a first anode composite layer and a second anode composite layer; and
rolling the first and second anode composite layers,
wherein the graphite-based anode active material includes artificial graphite and natural graphite,
a weight of artificial graphite in the graphite-based anode active material included in the first anode composite layer is greater than a weight of natural graphite, and
a weight of natural graphite in the graphite-based anode active material included in the second anode composite layer is greater than a weight of artificial graphite.

15. The method of claim 14, wherein the rolling is performed at a line pressure of 0.50 to 1.20 Ton/cm.
